# EUROPÄISCHE PATENTSCHRIFT

(11) **EP 3 688 108 B1**
(45) Veröffentlichungstag und Bekanntmachung des Hinweises auf die Patenterteilung: **20.10.2021**
(21) Anmeldenummer: 18750146.5
(22) Anmeldetag: 31.07.2018
(51) Int. Cl.: C09J 7/35, C09J 7/38, C09J 5/04

(54) **KLEBEBAND ZUM AUFBRINGEN AUF EIN BAUTEIL EINES KRAFTFAHRZEUGS, VERWENDUNG EINES KLEBEBANDS, VERBUND ZWEIER BAUTEILE SOWIE VERFAHREN ZUM VERKLEBEN ZWEIER BAUTEILE EINES KRAFTFAHRZEUGS**
ADHESIVE TAPE FOR APPLYING TO A COMPONENT OF A MOTOR VEHICLE, USE OF AN ADHESIVE TAPE, ASSEMBLY OF TWO COMPONENTS, AND METHOD FOR STICKING TOGETHER TWO COMPONENTS OF A MOTOR VEHICLE
RUBAN ADHÉSIF À APPLIQUER SUR UNE PIÈCE D'UN VÉHICULE AUTOMOBILE, UTILISATION D'UN RUBAN ADHÉSIF, ASSEMBLAGE DE DEUX PIÈCES ET PROCÉDÉ POUR COLLER DEUX PIÈCES D'UN VÉHICULE AUTOMOBILE

(30) Priorität: 27.09.2017 DE 102017122431
(43) Veröffentlichungstag der Anmeldung: 05.08.2020
(73) Patentinhaber: Webasto SE, 82131 Stockdorf (DE)
(72) Erfinder: STEINBACHER, Christian, 82131 Stockdorf (DE)
(74) Vertreter: Epping - Hermann - Fischer
(86) Internationale Anmeldenummer: PCT/EP2018/070734
(87) Internationale Veröffentlichungsnummer: WO 2019/063163

(56) Entgegenhaltungen:
- EP-A1- 0 974 632
- WO-A1-2014/047932
- US-A1- 2016 298 001

## Beschreibung

Die Erfindung betrifft ein Klebeband zum Aufbringen auf ein Bauteil eines Kraftfahrzeugs. Die Erfindung betrifft darüber hinaus die Verwendung eines solchen Klebebands zum Verkleben zweier Bauteile eines Kraftfahrzeugs, den Verbund zweier Bauteile eines Kraftfahrzeugs sowie ein Verfahren zum Verkleben zweier Bauteile eines Kraftfahrzeugs.

Zum Verkleben zweier Bauteile im Kraftfahrzeugbereich, beispielsweise zum Verbinden eines transparenten Dachelements mit einem Rahmenelement im Fahrzeugdach, werden neben dem eigentlichen Klebstoff sogenannte Primer (Englisch für Haftvermittler) verwendet, sodass ein sicheres Verbinden der jeweiligen Bauteile gewährleistet ist. Die Primer werden typischerweise manuell als Flüssigwerkstoffe aufgebracht. Eine solche Vorbehandlung für das Kleben, die auch als Oberflächenbehandlung bezeichnet wird, ist typischerweise dann notwendig, wenn Bauteile mit anorganischer Oberfläche mit Bauteilen organischer Oberfläche verklebt werden sollen.

Aus der US 4885887 A ist ein EPDM Isolierband mit einer zusätzlichen Primerbeschichtung bekannt.

Aus der EP 0 974 632 A1 ist ein doppelseitiges Klebeband mit einem reaktiven, feuchtigkeitsvernetzenden viskoelastischen Träger bekannt, der beidseitig mit einer druckempfindlichen Selbstklebemasse beschichtet ist.

Die US 2016/298001 A1 offenbart ein Klebeband, umfassend einen perforierten Träger und einen Strukturklebstoff mit Klebrigkeit, wobei der Träger zwei gegenüberliegende Seiten aufweist und auf den gegenüberliegenden Seiten den Strukturklebstoff mit Klebrigkeit trägt, so dass zwei Gegenstände durch das Klebeband verbunden werden können, wobei die beiden Gegenstände zunächst durch Druck zusammengehalten und anschließend durch den Strukturklebstoff verbunden werden, so dass der Strukturklebstoff eine direkte Verbindung von einem Gegenstand zum anderen durch die Perforationen im Träger bildet.

WO 2014/047932 A1 betrifft eine wärmeleitende Haftkleberzusammensetzung und ein wärmeleitendes Haftklebeband mit ausgezeichneter Haftfestigkeit und hoher Wärmeleitfähigkeit.

Eine Aufgabe, die der Erfindung zugrunde liegt, ist es, ein Konzept anzugeben, welches zu einem besonders effizienten Verkleben zweier Bauteile im Kraftfahrzeugbereich beiträgt. Gemäß einem Aspekt wird ein Klebeband zum Aufbringen auf ein Bauteil eines Kraftfahrzeuges offenbart. Das Klebeband besteht aus einer Primerschicht mit einer selbstklebenden Unterseite und einer selbstklebenden Oberseite. Die Primerschicht ist aktivierbar zur chemischen Reaktion mit einem Klebstoff ausgebildet.

Das beschriebene Klebeband, welches auch als Primerband oder Primerklebeband bezeichnet werden kann, besteht gemäß zumindest einer Ausführungsform aus dem Primer bzw. Primerwerkstoff, der als selbstklebende Schicht auf einem Bauteil eines Kraftfahrzeuges aufgebracht werden kann und daran haftet. Mit anderen Worten ist ein Primer alleinig als Band selbst direkt auf ein Bauteil aufbringbar. Anders ausgedrückt handelt es sich um einen als Klebeband ausgebildeten Primer, der keine weiteren, zusätzlichen Schichten, wie etwa Polyethylenschichten, aufweist. Das Klebeband weist somit ausschließlich einen aktivierbaren Primerwerkstoff auf. Der Primer wird nicht nasschemisch oder als eine zusätzliche Schicht eines Klebebands aufgebracht. Mittels des Klebebandes lässt sich somit die eingangs erwähnte Oberflächenvorbehandlung für ein Verkleben mit einem weiteren Bauteil effizient und kostengünstig bewerkstelligen.

Mit Vorteil ist mittels des Klebebandes ein präzises Auftragen des Primers, etwa hinsichtlich einer Schichtdicke und einer vorgegebenen Spur auf dem Bauteil ermöglicht. Insbesondere im Vergleich zu einem nasschemischen Auftragen, was typischerweise manuell erfolgt, ist eine definierte Primervorbehandlung gewährleistet. Beispielsweise ist durch eine definierte Schichtdicke des Primerbandes, die beispielsweise 5 bis 20 µm betragen kann, eine homogene Verteilung auf dem Bauteil gewährleistet. Weiterhin trägt das Klebeband dazu bei, dass ein automatisiertes Auftragen des Klebebands und somit des Primers ermöglicht ist. Beispielsweise kann das Klebeband von einer Rolle abgerollt werden.

Weiterhin ist es nicht notwendig, einen Primer nasschemisch aufzubringen, wodurch die Gefahr einer Verschmutzung des Primers, etwa durch Fingerabdrücke oder Staub oder dergleichen, vermieden werden kann. Im Zuge dessen können besondere Schutzmaßnahmen und spezielle Schulungen für Mitarbeiter beim Auftragen eines Primers im nasschemischen Verfahren vermieden werden.

Ein weiterer Vorteil besteht darin, dass lange Offenzeiten ermöglicht sind. Im Gegensatz zur nasschemischen Auftragsweise eines flüssigen Primers kann das eigentliche Verkleben zweier Bauteile zu einem deutlich späteren Zeitpunkt stattfinden. Bei der nasschemischen Variante müsste aufgrund der kurzen Öffnungszeiten relativ schnell mit dem eigentlichen Klebevorgang begonnen werden, da ansonsten die Haftung reduziert würde. Dadurch, dass die Primerschicht aktivierbar ist, ist es möglich, das Primerband erst unmittelbar vor der Klebstoffapplikation auf dem Bauteil zu aktivieren. Die Aktivierung kann beispielsweise durch Induktion, Druck, Temperatureinwirkung oder durch UV-Bestrahlung erfolgen. Das Primerband trägt somit dazu bei, dass die eigentliche Klebstoffapplikation auf dem Bauteil und die Vorbehandlung mittels des Klebebands zeitlich weit auseinanderfallen können.

Gemäß einer Ausführungsform sind die Oberseite und/oder die Unterseite mit einer abziehbaren Schutzfolie versehen. Dadurch kann das Primerband vor äußeren Einwirkungen geschützt aufbewahrt werden und entsprechend des Einsatzes durch Abziehen der Schutzfolien vorbereitet werden. Beispielsweise wird das Primerband zunächst auf das erste Bauteil geklebt. Die noch nicht verwendete Primerbandoberseite wird bis kurz vor der Applikation mit dem Kleber durch die weitere Schutzfolie geschützt, wodurch zu der erwähnten besonders langen Offenzeit beigetragen wird.

Gemäß einer Ausgestaltung weist die Primerschicht zumindest eine Verbindung mit zumindest einer Isocyanatgruppe und eine Verbindung mit zumindest einer Hydroxygruppe auf. Die Verbindung mit der zumindest einen Hydroxygruppe weist beispielsweise ein Polyol, insbesondere ein Diol oder Triol, auf. Bei einem Polyol handelt es sich um einen mehrwertigen Alkohol, insbesondere einen zweiwertigen oder dreiwertigen Alkohol.

Gemäß einer Ausführungsform weist die Primerschicht zumindest die folgenden Komponenten auf:
- Isocyanat,
- mehrwertiger Alkohol,
- Katalysator,
- Additiv, und
- Füllstoff.
Bei dem Isocyanat handelt es sich beispielsweise um ein Polyisocyanat, etwa eine Verbindung mit zwei oder mehreren Isocyanatgruppen.

Die vorgenannten Ausführungsformen tragen zu den eingangs genannten Vorteilen und Funktionen bei.

Gemäß einer Ausführungsform ist die Primerschicht als Schwarzprimerschicht ausgebildet. Mit anderen Worten liegt der typischerweise im nasschemischen Verfahren aufgebrachte Schwarzprimer als klebende Schicht vor.

Beispielsweise weist das Primerband, insbesondere die Primerschicht, auf: Polyol Tri-, Di, ein Lösungsmittel (beispielsweise Wasser), Additive (beispielsweise Kieselsäure), Isocyanatmischung (2,4; 4,4 MDI) und Haftvermittler (beispielsweise Silan). Beispielsweise weist das Primerband, insbesondere die Primerschicht, auf: Isocyanat, mehrwertigen Alkohol, einen Katalysator, ein Additiv und einen Füllstoff.

Gemäß eines zweiten Aspekts wird die Verwendung eines solchen Klebebands nach einer der zuvor beschriebenen Ausführungsformen zum Verkleben zweier Bauteile eines Kraftfahrzeugs offenbart.

Dadurch werden die eingangs genannten Vorteile und Funktionen ermöglicht.

Gemäß einem weiteren Aspekt wird der Verbund zweier Bauteile eines Kraftfahrzeuges offenbart. Auf eine erste Oberfläche des ersten Bauteils ist ein erstes Klebeband gemäß der zuvor beschriebenen Ausführungsformen aufgeklebt. Auf einer der ersten Oberfläche gegenüberliegenden zweiten Oberfläche des zweiten Bauteils ist ein zweites Klebeband nach einer der zuvor beschriebenen Ausführungsformen aufgeklebt. Zwischen den beiden Klebebändern ist ein Klebstoff angeordnet, sodass nach Aktivierung der Primerschichten und chemischer Reaktion der Klebebänder mit dem Klebstoff eine stoffschlüssige Verbindung zwischen beiden Bauteilen ausgebildet ist. Bei dem Klebstoff handelt es sich beispielsweise um einen Zweikomponenten-Polyurethan-Klebstoff.

Der Verbund ermöglicht im Wesentlichen die eingangs genannten Vorteile und Funktionen.

Gemäß einem weiteren Aspekt wird ein Verfahren zum Verkleben zweier Bauteile eines Kraftfahrzeugs beschrieben. Das Verfahren weist die Schritte auf:
- Aufkleben eines ersten Klebebands nach einem der zuvor beschriebenen Ausführungsformen mit der Unterseite der Primerschicht auf eine erste Oberfläche des ersten Bauteils;
- Aufkleben eines zweiten Klebebands nach einem der zuvor beschriebenen Ausführungsformen mit der Unterseite der Primerschicht auf eine zweite Oberfläche des zweiten Bauteils;
- Aktivieren der Primerschichten der beiden Klebebänder,
- Aufbringen eines Klebstoffs auf die Oberseite der aktivierten Primerschicht des ersten und/oder zweiten Bauteils,
- Zusammenfügen der beiden Bauteile übereinander, so dass so dass nach chemischer Reaktion des Klebstoffs mit den Primerschichten beider Bauteile eine stoffschlüssige Verbindung zwischen beiden Bauteilen ausgebildet ist.

Das Verfahren ermöglicht im Wesentlichen die vorgenannten Vorteile und Funktionen. Das Aktivieren der Primerschichten erfolgt alternativ auch nach dem Aufbringen des Klebstoffs oder auch nach dem Zusammenfügen beider Bauteile.

Gemäß einer weiteren Ausführungsform werden die Klebebänder beider Bauteile vor den Schritten des Aufklebens von einer Rolle abgerollt und/oder abgelängt.

Weitere Vorteile und Funktionen sind in der nachfolgenden Beschreibung eines Ausführungsbeispiels offenbart.

Das Ausführungsbeispiel wird anhand der angehängten Figuren nachfolgend beschrieben. Gleichartige oder gleich wirkende Elemente sind figurenübergreifend mit den gleichen Bezugszeichen versehen.

In den Figuren zeigen:
Figur 1 eine schematische Ansicht eines Bauteilverbunds mit Oberflächenvorbehandlung gemäß dem Stand der Technik,
Figur 2a eine schematische Ansicht eines Klebebands gemäß dem Ausführungsbeispiel der Erfindung,
Figur 2b eine schematische Ansicht von Komponenten des Klebebands,
Figur 3 eine schematische Ansicht zweier Bauteile mit Klebebändern gemäß Figuren 2A und 2B,
Figur 4 ein Bauteilverbund mit Klebebändern gemäß Figuren 2A und 2B und
Figur 5 ein schematisches Ablaufdiagramm eines Verfahrens zum Verkleben zweier Bauteile eines Kraftfahrzeugs.

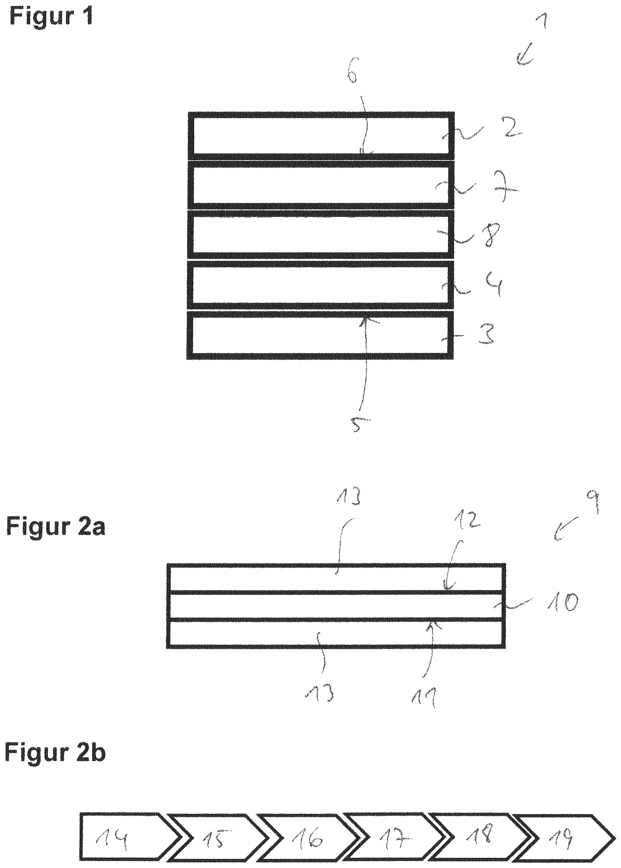

Figur 1 zeigt schematisch einen schichtartigen Verbund 1 zweier Bauteile 2 und 3, die miteinander verklebt sind. Die Bauteile 2 und 3 können auch als Substrate bezeichnet werden. Bei den Bauteilen 2 und 3 handelt es sich um Komponenten aus dem Fahrzeugbereich, insbesondere Fahrzeugdach-Komponenten.

Beispielsweise ist das erste Bauteil 2 ein transparentes Dachelement, etwa ein Schiebedachelement, und das zweite Bauteil 3 ein metallisches Dachrahmenelement. Das erste Bauteil 2 ist beispielsweise aus Polycarbonat (PC) gefertigt, welches zusätzlich beschichtet sein kann, beispielsweise mit einer Kratzfest- und/oder UV-Beschichtung. Bei dem zweiten Bauteil 3 handelt es sich beispielsweise um ein beschichtetes Stahl-Bauteil. Weitere mögliche Bauteilmaterialien sind beispielsweise Xiran (SMA), Keramikfritte oder Glas. Es handelt sich dabei jedoch nicht um eine abschließende Materialliste.

Zum Verbinden der beiden Bauteile 2 und 3 mittels Verklebung ist beispielsweise das zweite Bauteil 3 mit einem Schwarzprimer 4 auf einer ersten Oberfläche 5 versehen. Das gegenüberliegende erste Bauteil 2 ist an einer gegenüberliegenden zweiten Oberfläche 6 mit einem Primer 7 versehen, der auch als Aktivator bezeichnet werden kann. Für die endgültige Verbindung beider Bauteile 2 und 3 ist ein Klebstoff 8, im Beispiel der Figur 1 ein Zweikomponenten-Polyurethanklebstoff, dazwischen eingebracht, sodass eine haftende Verbindung beider Bauteile 2 und 3 bewirkt ist.

Bei der beschriebenen Variante sind der Schwarzprimer 4 und/oder der Primer 7 nasschemisch aufgebracht. Es bilden sich zwischen den Bauteilen 2 und 3 und den jeweiligen angrenzenden Schichten des Primers 7, des Klebstoffs 8 und des Schwarzprimers 4 Grenzschichten aus, wobei keine aktive chemische Reaktion zwischen den einzelnen Komponenten stattfindet. Nachteilig ist weiterhin, dass Lösungsmitteldämpfe des Schwarzprimers 8 austreten, welche gesundheitsgefährdend für Mitarbeiter sind oder sein können. Auch ist es nötig, Ablüftzeiten vorzusehen. Weiterhin sind eine Offenzeit und eine Topfzeit limitiert, da ansonsten eine Haftung des Klebstoffs 8 reduziert oder unmöglich ist.

Figur 2A beschreibt ein Klebeband 9 gemäß einem Ausführungsbeispiel der Erfindung. Das Klebeband 9 weist eine Primerschicht 10 auf, die an einer Unterseite 11 und einer Oberseite 12, die der Unterseite 11 gegenüberliegt, selbstklebend ist. Sowohl die Oberseite 12 als auch die Unterseite 11 sind mit einer abziehbaren Schutzfolie 13, die als Inliner bezeichnet werden können, versehen.

Figur 2B zeigt beispielhafte Komponenten der Primerschicht 10, bei welchen es sich beispielsweise um Isocyanat 14, ein Diol 15, ein Triol 16, einen Katalysator 17, einen Füllstoff 18 und Additive 19 handelt.

Bei dem Klebeband 9 handelt es sich im Wesentlichen um ein doppelseitiges Klebeband, welches lediglich einen Primer oder einen Primerwerkstoff aufweist. Die Primerschicht 10 hat beispielsweise eine vorgegebene Dicke von 5 bis 20 µm. Das Klebeband 9 ermöglicht die eingangs genannten Vorteile und Funktionen, insbesondere bei der Applikation zum Verkleben zweier Bauteile aus dem Fahrzeugbereich.

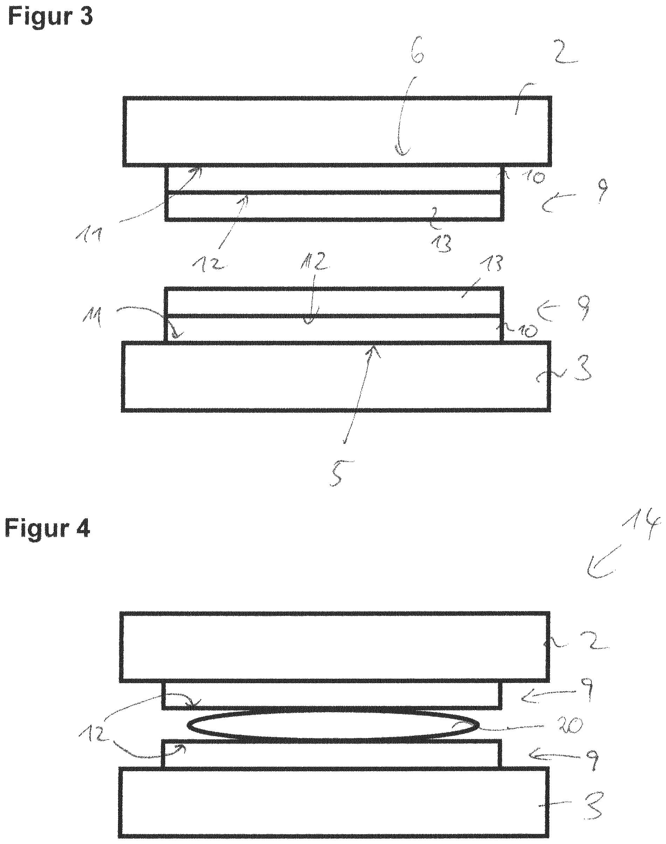

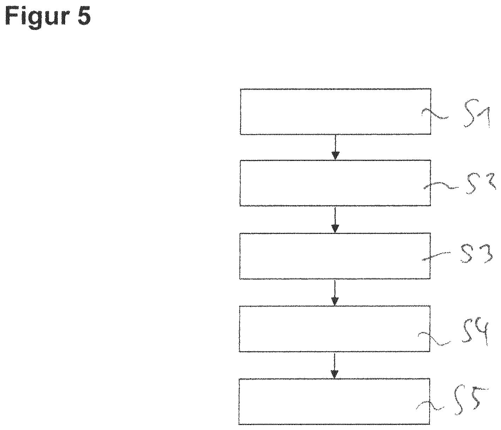

Das Verkleben zweier Bauteile wird anhand der Figuren 3 und 4 in Verbindung mit der Figur 5, die ein schematisches Ablaufdiagramm eines solchen Verfahrens zeigt, beschrieben.

In einem ersten Schritt S1 wird sowohl das erste Bauteil 2 als auch das zweite Bauteil 3 an den gegenüberliegenden Oberflächen 5 und 6 mit einem Klebeband 9 gemäß Figur 2A versehen.

Im ersten Schritt S1 wird die Schutzfolie 13 einer der Unterseiten 11 der Primerschicht 10 abgezogen und das Klebeband 9 auf die Oberflächen 5 beziehungsweise 6 jeweils aufgeklebt. Nun kann, nahezu unabhängig von einer Offenzeit, zu einem späteren Verfahrensschritt die eigentliche Verklebung der Bauteile 2 und 3 stattfinden.

In einem nächsten Schritt S2 werden die beiden übriggebliebenen Schutzfolien 13 abgezogen, sodass die Oberseiten 12 der Primerschichten 10 freiliegen.

Im nächsten Schritt S3 werden die beiden Primerschichten 10 der Klebebänder 9 aktiviert, beispielsweise durch thermischen Energieeintrag.

Im nächsten Schritt S4 werden beide oder zumindest eine Oberseite 12 der jeweiligen Primerschichten 10 mit einem Klebstoff 20 versehen. Dies ist in Figur 4 gezeigt, die einen Bauteilverbund 14 darstellt. Der Klebstoff 20 ist beispielsweise ein Zweikomponenten-Polyurethan-Klebstoff. Auch ein Einkomponenten-Polyurethan-Klebstoff ist möglich.

In einem weiteren Schritt S5 werden die Bauteile 2 und 3 so zusammengebracht, dass zwischen den Klebebändern 9 der Klebstoff 20 vorliegt und die beiden Bauteile 2 und 3 nach chemischer Reaktion mit den aktivierten Primerschichten 10 stoffschlüssig verbunden sind.

Durch die Aktivierung der Primerschichten vernetzt insbesondere das Isocyanat und reagiert zusätzlich mit dem Klebstoff 20, sodass eine besonders stabile Verbindung der beiden Bauteile 2 und 3 erreicht ist. Insbesondere wird eine besonders hohe Vernetzung zwischen den Primerschichten 10 und dem Klebstoff 20 erreicht. Dadurch kommt es nicht, wie anhand von Figur 1 beschrieben, zur Ausbildung von Grenzschichten zwischen den Primerschichten 10 und dem Klebstoff 20, sondern es liegt letztlich nur mehr jeweils eine Grenzschicht zwischen den Bauteilen 2, 3 und der jeweiligen Primerschicht 10 vor.

### Bezugszeichenliste

- 1: Verbund
- 2: erstes Bauteil
- 3: zweites Bauteil
- 4: Schwarzprimer
- 5: erste Oberfläche
- 6: zweite Oberfläche
- 7: Primer
- 8: Klebstoff
- 9: Klebeband
- 10: Primerschicht
- 11: Unterseite
- 12: Oberseite
- 13: Schutzfolie
- 14: Isocyanat
- 15: Diol
- 16: Triol
- 17: Katalysator
- 18: Füllstoff
- 19: Additiv
- 20: Klebstoff

## Patentansprüche

1. Klebeband (9) zum Aufbringen auf ein Bauteil (2, 3) eines Kraftfahrzeuges, bestehend aus
- einer Primerschicht (10) mit einer selbstklebenden Unterseite (11) und einer selbstklebenden Oberseite (12),
- wobei die Primerschicht (10) aktivierbar zur chemischen Reaktion mit einem Klebstoff (20) ausgebildet ist.

2. Klebeband (9) nach Anspruch 1,
wobei die Oberseite (12) und/oder die Unterseite (11) mit einer abziehbaren Schutzfolie (13) versehen sind.

3. Klebeband (9) nach Anspruch 1 oder 2,
wobei die Primerschicht (10) zumindest eine Verbindung mit zumindest einer Isocyanatgruppe und eine Verbindung mit zumindest einer Hydroxygruppe aufweist.

4. Klebeband (9) nach einem der vorhergehenden Ansprüche,
wobei die Primerschicht (10) zumindest die folgenden Komponenten aufweist:
- Isocyanat (14),
- mehrwertiger Alkohol,
- Katalysator (17),
- Additiv (19), und
- Füllstoff (18).

5. Klebeband (9) nach einem der vorhergehenden Ansprüche,
wobei die Primerschicht (10) thermisch, mechanisch, induktiv oder mittels UV-Eintrag aktivierbar ist.

6. Klebeband (9) nach einem der vorhergehenden Ansprüche,
wobei die Primerschicht (10) als Schwarzprimerschicht ausgebildet ist.

7. Verwendung eines Klebebands (9) nach einem der vorhergehenden Ansprüche zum Verkleben zweier Bauteile (2, 3) eines Kraftfahrzeuges.

8. Verbund (1) zweier Bauteile (2, 3) eines Kraftfahrzeuges,
wobei
- auf eine erste Oberfläche (5) des ersten Bauteils (2) ein erstes Klebeband (9) nach einem der Ansprüche 1 bis 6 aufgeklebt ist,
- auf eine der ersten Oberfläche (5) gegenüberliegenden zweiten Oberfläche (6) des zweiten Bauteils (3) ein zweites Klebeband (9) nach einem der Ansprüche 1 bis 6 aufgeklebt ist, und
- zwischen den beiden Klebebändern (9) ein Klebstoff (20) angeordnet ist, so dass nach Aktivierung der Primerschichten (10) und chemischer Reaktion der Klebebänder (9) mit dem Klebstoff (20) eine stoffschlüssige Verbindung zwischen beiden Bauteilen (2, 3) ausgebildet ist.

9. Verfahren zum Verkleben zweier Bauteile (2, 3) eines Kraftfahrzeugs, mit den Schritten:
- Aufkleben eines ersten Klebebands (9) nach einem der Ansprüche 1 bis 6 mit der Unterseite (11) der Primerschicht (10) auf eine erste Oberfläche (5) des ersten Bauteils (2);
- Aufkleben eines zweiten Klebebands (9) nach einem der Ansprüche 1 bis 6 mit der Unterseite (11) der Primerschicht (10) auf eine zweite Oberfläche (6) des zweiten Bauteils (3);
- Aktivieren der Primerschichten (10) der beiden Klebebänder (9),
- Aufbringen eines Klebstoffs (20) auf die Oberseite (1) der aktivierten Primerschicht (10) des ersten und/oder zweiten Klebebands (9),
- Zusammenfügen beider Bauteile (2, 3) übereinander, so dass nach chemischer Reaktion des Klebstoffs (20) mit den Primerschichten (10) beider Bauteile (2, 3) eine stoffschlüssige Verbindung zwischen beiden Bauteilen (2, 3) ausgebildet ist.

10. Verfahren nach Anspruch 9,
wobei vor den Schritten des Aufklebens der Klebebänder (9) die Klebebänder (9) von einer Rolle abgerollt und/oder abgelängt werden.

## Claims

1. Adhesive tape (9) for application to a component (2, 3) of a motor vehicle, consisting of
- a primer layer (10) having a self-adhesive lower side (11) and a self-adhesive upper side (12),
- where the primer layer (10) is embodied such that it is activatable for chemical reaction with an adhesive (20).

2. Adhesive tape (9) according to Claim 1,
where the upper side (12) and/or the lower side (11) have been provided with a removable protective film (13).

3. Adhesive tape (9) according to Claim 1 or 2,
where the primer layer (10) at least comprises a compound having at least one isocyanate group and a compound having at least one hydroxyl group.

4. Adhesive tape (9) according to any of the preceding claims,
where the primer layer (10) at least comprises the following components:
- isocyanate (14),
- polyhydric alcohol,
- catalyst (17),
- additive (19), and
- filler (18).

5. Adhesive tape (9) according to any of the preceding claims,
where the primer layer (10) is activatable thermally, mechanically, inductively or by means of UV input.

6. Adhesive tape (9) according to any of the preceding claims,
where the primer layer (10) is embodied as a black primer layer.

7. Use of an adhesive tape (9) according to any of the preceding claims for bonding two components (2, 3) of a motor vehicle.

8. Assembly (1) of two components (2, 3) of a motor vehicle,
where
- adhered to a first surface (5) of the first component (2) is a first adhesive tape (9) according to any of Claims 1 to 6,
- adhered to a second surface (6) of the second component (3), opposite the first surface (5), is a second adhesive tape (9) according to any of Claims 1 to 6, and
- disposed between the two adhesive tapes (9) is an adhesive (20), so that after activation of the primer layers (10) and chemical reaction of the adhesive tapes (9) with the adhesive (20), a material bond is formed between both components (2, 3).

9. Method for bonding two components (2, 3) of a motor vehicle, comprising the steps of:
- adhering a first adhesive tape (9) according to any of Claims 1 to 6 by the lower side (11) of the primer layer (10) to a first surface (5) of the first component (2);
- adhering a second adhesive tape (9) according to any of Claims 1 to 6 by the lower side (11) of the primer layer (10) to a second surface (6) of the second component (3);
- activating the primer layers (10) of the two adhesive tapes (9),
- applying an adhesive (20) to the upper side (1) of the activated primer layer (10) of the first and/or second adhesive tape (9),
- assembling the two components (2, 3) one above the other, so that after chemical reaction of the adhesive (20) with the primer layers (10) of both components (2, 3), a material bond is formed between the two components (2, 3).

10. Method according to Claim 9,
where before the steps of adhering the adhesive tapes (9), the adhesive tapes (9) are removed in lengths and/or unwound from a roll.

## Revendications

1. Bande adhésive (9) pour l'application sur un composant (2, 3) d'un véhicule automobile, constituée par
- une couche d'accrochage (10) pourvue d'un côté inférieur autocollant (11) et d'un côté supérieur autocollant (12),
- dans laquelle la couche d'accrochage (10) est configurée pour être activable pour la réaction chimique avec un adhésif (20) .

2. Bande adhésive (9) selon la revendication 1, dans laquelle le côté supérieur (12) et/ou le côté inférieur (11) sont munis d'une feuille de protection pelliculable (13).

3. Bande adhésive (9) selon la revendication 1 ou 2, dans laquelle la couche d'accrochage (10) comprend au moins un composé contenant au moins un groupe isocyanate et un composé contenant au moins un groupe hydroxy.

4. Bande adhésive (9) selon l'une quelconque des revendications précédentes, dans laquelle la couche d'accrochage (10) comprend au moins les composants suivants :
- un isocyanate (14),
- un alcool polyvalent,
- un catalyseur (17),
- un additif (19) et
- une charge (18).

5. Bande adhésive (9) selon l'une quelconque des revendications précédentes, dans laquelle la couche d'accrochage (10) est activable thermiquement, mécaniquement, inductivement ou au moyen d'un apport d'UV.

6. Bande adhésive (9) selon l'une quelconque des revendications précédentes, dans laquelle la couche d'accrochage (10) est configurée sous la forme d'une couche d'accrochage noire.

7. Utilisation d'une bande adhésive (9) selon l'une quelconque des revendications précédentes pour le collage de deux composants (2, 3) d'un véhicule automobile.

8. Composite (1) de deux composants (2, 3) d'un véhicule automobile, dans lequel
- une première bande adhésive (9) selon l'une quelconque des revendications 1 à 6 est collée sur une première surface (5) du premier composant (2),
- une deuxième bande adhésive (9) selon l'une quelconque des revendications 1 à 6 est collée sur une deuxième surface (6) du deuxième composant (3), opposée à la première surface (5), et
- un adhésif (20) est agencé entre les deux bandes adhésives (9), de telle sorte qu'après une activation des couches d'accrochage (10) et une réaction chimique des bandes adhésives (9) avec l'adhésif (20), une liaison par accouplement de matière est formée entre les deux composants (2, 3).

9. Procédé de collage de deux composants (2, 3) d'un véhicule automobile, comprenant les étapes suivantes :
- le collage d'une première bande adhésive (9) selon l'une quelconque des revendications 1 à 6 avec le côté inférieur (11) de la couche d'accrochage (10) sur une première surface (5) du premier composant (2) ;
- le collage d'une deuxième bande adhésive (9) selon l'une quelconque des revendications 1 à 6 avec le côté inférieur (11) de la couche d'accrochage (10) sur une deuxième surface (6) du deuxième composant (3) ;
- l'activation des couches d'accrochage (10) des deux bandes adhésives (9),
- l'application d'un adhésif (20) sur le côté supérieur (1) de la couche d'accrochage activée (10) de la première et/ou deuxième bande adhésive (9),
- l'assemblage des deux composants (2, 3) l'un au-dessus de l'autre, de telle sorte qu'après une réaction chimique de l'adhésif (20) avec les couches d'accrochage (10) des deux composants (2, 3), une liaison par accouplement de matière est formée entre les deux composants (2, 3).

10. Procédé selon la revendication 9, dans lequel les bandes adhésives (9) sont déroulées et/ou découpées en longueur avant les étapes de collage des bandes adhésives (9).
